# FASCICULE DE BREVET EUROPEEN

(11) **EP 3 166 252 B1**
(45) Date de publication et mention de la délivrance du brevet: **23.01.2019**
(21) Numéro de dépôt: 16197434.0
(22) Date de dépôt: 04.11.2016
(51) Int. Cl.: H04L 9/32

(54) **PROCÉDÉ D'ENREGISTREMENT SÉCURISÉ DE DONNÉES, DISPOSITIF ET PROGRAMME CORRESPONDANTS**
VERFAHREN ZUR SICHEREN SPEICHERUNG VON DATEN, ENTSPRECHENDES GERÄT UND PROGRAMM
METHOD FOR SECURE STORING OF DATA, CORRESPONDING DEVICE AND PROGRAM

(30) Priorité: 06.11.2015 FR 1560682
(43) Date de publication de la demande: 10.05.2017
(73) Titulaire: Ingenico Group, 75015 Paris (FR)
(72) Inventeur: ROYER, Jessica, 26000 Valence (FR); BELLAHCENE, Mohammed, 69003 Lyon (FR); POMMARET, Jean-Christophe, 26600 Tain-L'Hermitage (FR); ROLIN, Christian, 07500 Guilherand Granges (FR); MULLER, Laurent, 69330 Meyzieu (FR)
(74) Mandataire: Vidon Brevets & Stratégie

(56) Documents cités:
- US-A1- 2002 147 918
- YIN HU ET AL: "A fast real-time memory authentication protocol", PROCEEDINGS OF THE 3RD ACM WORKSHOP ON SCALABLE TRUSTED COMPUTING, STC '08, 1 janvier 2008 (2008-01-01), page 31, XP055289927, New York, New York, USA DOI: 10.1145/1456455.1456461 ISBN: 978-1-60558-295-5

## Description

### 1. Domaine

L'invention se rapporte au domaine de la sécurisation de données et porte plus particulièrement sur l'enregistrement sécurisé de données dans un dispositif d'enregistrement de données.

### 2. Art Antérieur

L'enregistrement de données dans les terminaux et équipements informatiques tels que ordinateurs, serveurs, téléphones mobiles, objets connectés etc. présente aujourd'hui un défi majeur étant donné l'omniprésence actuelle de ce type d'appareil et la croissance continue du volume de données générées quotidiennement tant dans la sphère professionnelle que domestique. Pour répondre à cette problématique d'enregistrement de données, des progrès notables ont été réalisés dans la capacité des mémoires à enregistrer un grand volume de données dans un espace réduit.

Un besoin existe aujourd'hui plus particulièrement pour enregistrer en mémoire de façon sécurisée des données sensibles dont on souhaite contrôler l'accès. Des techniques de chiffrement ont ainsi été développées ces dernières années pour garantir la confidentialité des données enregistrées dans les dispositifs d'enregistrement de données. Ainsi, des mécanismes d'identification et/ou d'authentification sont aujourd'hui fréquemment mis en oeuvre pour contrôler l'accès à des données sensibles dans la mémoire d'un terminal. Ces mémoires, dites mémoires sécurisées ou mémoires protégées, permettent ainsi à un utilisateur d'enregistrer des données en vue d'y accéder ultérieurement en toute sécurité.

La mise en oeuvre de telles mémoires sécurisées dans des terminaux, tels qu'un ordinateur ou un téléphone mobile par exemple, présente toutefois certains problèmes. Les données sensibles sont généralement enregistrées dans des mémoires sécurisées de petite taille, la mise en oeuvre de ces mémoires présentant un coût important par rapport à une mémoire classique non protégée. De façon connue, un terminal peut comprendre une zone mémoire sécurisée dans laquelle sont enregistrées les données les plus sensibles d'un utilisateur, ainsi qu'une zone mémoire non sécurisée dans laquelle est enregistré le reste des données ne présentant pas un risque de sécurité particulier. Ce type d'arrangement se retrouve par exemple classiquement dans les terminaux de paiement comprenant une mémoire protégée pour enregistrer des données confidentielles et une mémoire non protégée pour enregistrer des données moins sensibles.

La taille réduite des zones mémoires sécurisées dans les terminaux, et plus généralement dans les dispositifs d'enregistrement de données, pose aujourd'hui un problème dans la mesure où l'on ne dispose pas toujours de l'espace mémoire sécurisé nécessaire pour enregistrer l'ensemble des données sensibles dont on souhaite protéger l'accès.

L'usage croissant de données confidentielles dans les équipements et processus modernes appelle par conséquent à une nouvelle solution garantissant un enregistrement sécurisé pour un grand volume de données dans un dispositif d'enregistrement de données, tout en limitant l'usage d'espace mémoire sécurisé. Un besoin existe en outre pour une solution d'enregistrement sécurisée assurant de façon fiable l'intégrité des données sensibles, notamment lors de l'accès par un utilisateur aux données en question.

Y. Hu, G. Hammouri, B. Sunar: "A Fast Real-time Memory Authentication Protocol", Proceedings of the 3rd ACM Workshop on Scalable Trusted Computing, STC'08, expose l'usage d'un arbre de hachage partiellement stocké dans une mémoire protége afin de sécuriser l'intégrité d'un ensemble de données.

Le document de publication de demande de brevet US 2002/147918 A1, Osthoff et al, expose le stockage d'un identifiant de dispositif, d'une valeur calculée en appliquant une fonction d'hachage sur ledit identifiant, et de ladite fonction d'hachage elle-même dans une mémoire sécurisée.

### 3. Résumé

Un des buts de l'invention est de remédier aux insuffisances et inconvénients de l'état de la technique.

À cet effet, la divulgation propose un procédé d'enregistrement sécurisé de données, mis en oeuvre dans un dispositif d'enregistrement de données comprenant une première mémoire non sécurisée et une deuxième mémoire sécurisée, le procédé comprenant les étapes suivantes :
- obtention, à partir d'une clé mère enregistrée dans la deuxième mémoire, d'une clé dérivée correspondant aux données enregistrées dans la deuxième mémoire ;
- chiffrement, à partir de la clé dérivée, des données délivrant des données chiffrées ;
- enregistrement des données chiffrées dans la première mémoire ;
- détermination d'une empreinte de hachage desdites données ;
- enregistrement de ladite empreinte de hachage, en association avec les données, dans un fichier de hachage enregistré dans la première mémoire ;
- enregistrement, dans la deuxième mémoire, d'une empreinte de hachage générale représentative du contenu du fichier de hachage comprenant ladite empreinte de hachage ; et
- suppression des données dans la deuxième mémoire postérieurement audit enregistrement des données chiffrées dans la première mémoire.

La présente technique permet avantageusement d'enregistrer de façon sécurisée des données dans le dispositif d'enregistrement de données tout en limitant l'espace mémoire utilisé à cet effet dans la mémoire sécurisée dudit dispositif. Pour ce faire, les données sont enregistrées sous forme chiffrée dans la mémoire non sécurisée. Ces mêmes données sont retirées de la mémoire sécurisée M2 afin de gagner de l'espace mémoire. La clé mère, à partir de laquelle sont chiffrées les données, est enregistrée dans la mémoire sécurisée du dispositif d'enregistrement de données de sorte à protéger l'accès à ladite clé mère.

Comme expliqué par la suite, la mise en oeuvre et l'enregistrement du fichier de hachage et de l'empreinte de hachage générale permet en outre de contrôler de façon fiable l'intégrité des données enregistrées sous forme chiffrée dans la mémoire non sécurisée.

Selon un mode de réalisation particulier, après son obtention, la clé dérivée est enregistrée dans la deuxième mémoire, le procédé comprenant en outre une étape de suppression de la clé dérivée dans la deuxième mémoire après le chiffrement desdites données. Il est ainsi possible d'économiser encore d'avantage d'espace dans la mémoire sécurisée du dispositif d'enregistrement de données.

Selon un mode de réalisation particulier, la clé mère est générée de façon aléatoire une fois pour toute dans le dispositif d'enregistrement de données. De cette manière, il est plus difficile pour un tiers malveillant de récupérer de façon frauduleuse la clé mère.

Selon un mode de réalisation particulier, lors de l'étape d'obtention, la clé dérivée est obtenue à partir :
- d'un identifiant d'utilisateur représentatif d'un utilisateur du dispositif d'enregistrement de données ; et
- d'un identifiant des données.

Selon une caractéristique particulière, la clé dérivée est ainsi liée à un utilisateur et aux données en question.

Selon un mode de réalisation particulier, lors dudit enregistrement des données chiffrées, lesdites données chiffrées sont enregistrées dans la première mémoire sous la forme d'un fichier chiffré auquel est attribué un nom de fichier comprenant l'identifiant d'utilisateur et l'identifiant des données. Il est ainsi possible de retrouver aisément un fichier chiffré comprenant, sous forme chiffrée, des données auxquelles on souhaite accéder.

Selon un mode de réalisation particulier, le procédé comprend, suite audit enregistrement de l'empreinte de hachage dans le fichier de hachage, un enregistrement d'une copie du fichier de hachage dans une mémoire de sauvegarde sécurisée du dispositif d'enregistrement de données. Dans un exemple particulier, cette mémoire de sauvegarde est comprise dans la deuxième mémoire sécurisée. S'il est ultérieurement détecté que le fichier de hachage enregistré dans la première mémoire n'est pas intègre, le dispositif d'enregistrement peut alors récupérer de façon sécurisée la copie du fichier de hachage dans la mémoire de sauvegarde. Dans un exemple particulier, en cas de détection d'une atteinte à l'intégrité du fichier de hachage dans la première mémoire, le dispositif d'enregistrement remplace alors ledit fichier de hachage dans la première mémoire par ladite copie provenant de la mémoire de sauvegarde.

La divulgation propose également un procédé de récupération sécurisée de données, mis en oeuvre dans un dispositif d'enregistrement de données comprenant une première mémoire non sécurisée et une deuxième mémoire sécurisée, le procédé comprenant :
- une vérification de l'intégrité d'un fichier de hachage enregistré dans la première mémoire, à partir d'une empreinte de hachage générale enregistrée dans la deuxième mémoire ;
- puis, si le fichier de hachage est détecté comme étant intègre, le procédé comprend en outre, sur réception d'une requête d'accès à des données, les étapes suivantes :
   - obtention, à partir d'une clé mère enregistrée dans la deuxième mémoire, d'une clé dérivée correspondant à des données chiffrées enregistrées dans la première mémoire ;
   - déchiffrage, à partir de la clé dérivée obtenue, des données chiffrées de sorte à récupérer lesdites données ;
   - enregistrement desdites données dans la deuxième mémoire ;
   - détermination de l'empreinte de hachage desdites données ;
   - vérification de l'intégrité des données enregistrées dans la deuxième mémoire en comparant l'empreinte de hachage déterminée pour les données avec une empreinte de hachage enregistrée dans le fichier de hachage en association avec lesdites données ; et
- autorisation d'un accès aux données dans la deuxième mémoire en réponse à ladite requête d'accès, seulement si les données ont été déterminées comme étant intègres.

La présente technique permet ainsi d'accéder aux données enregistrées dans la mémoire non sécurisée sans compromettre la confidentialité desdites données. Lors du procédé de récupération sécurisée de données, à aucun moment les données ne sont présentes sous forme non chiffrée (en clair) dans la mémoire non sécurisée. L'invention permet en outre de vérifier de façon fiable l'intégrité des données auxquelles on accède au besoin dans la mémoire sécurisée.

Selon un mode de réalisation particulier, le procédé comprend une étape d'obtention d'un identifiant d'utilisateur représentatif d'un utilisateur du dispositif d'enregistrement de données et d'un identifiant des données, dans lequel, la clé dérivée est obtenue à partir de la clé mère en utilisant l'identifiant d'utilisateur et l'identifiant des données.

De façon avantageuse, dans la mesure où l'identifiant d'utilisateur et l'identifiant de données sont constants, la clé dérivée déterminée à partir de la clé mère est toujours la même.

Selon un mode de réalisation particulier, le procédé comprend, postérieurement à un accès aux données, l'exécution d'étapes de chiffrement des données en données chiffrées, d'enregistrement des données chiffrées, de détermination d'une empreinte de hachage, d'enregistrement de l'empreinte de hachage, d'enregistrement de l'empreinte de hachage générale et de suppression des données, telles que définies ci-avant dans le procédé d'enregistrement sécurisé.

L'invention permet alors avantageusement d'enregistrer de façon sécurisée, dans la mémoire non sécurisée, des données auxquelles on a accédées dans la mémoire sécurisée.

Selon un mode de réalisation particulier, le procédé comprend en outre, postérieurement à un accès de l'utilisateur aux données dans la deuxième mémoire, les étapes suivantes :
- détermination d'une seconde empreinte de hachage desdites données suite audit accès; et
- comparaison de ladite seconde empreinte de hachage avec l'empreinte de hachage enregistrée dans le fichier de hachage en association avec les données, afin de détecter si les données ont été modifiées lors dudit accès ;
   dans lequel le procédé comprend l'exécution d'étapes de chiffrement, d'enregistrement des données chiffrées, de détermination d'une empreinte de hachage, d'enregistrement de ladite empreinte de hachage, et d'enregistrement d'une valeur de hachage générale, telles que définies ci-avant dans le procédé d'enregistrement sécurisé, uniquement s'il est détecté que les données ont été modifiées lors dudit accès.

On peut ainsi éviter la répétition superflue de certaines étapes du procédé d'enregistrement sécurisée suite à un accès à des données dans la mémoire sécurisée du terminal. Il en résulte un gain de temps et d'efficacité, ainsi qu'une économie des ressources utilisées dans le dispositif d'enregistrement de données.

Dans un mode particulier de réalisation, les différentes étapes du procédé d'enregistrement sécurisé de données et du procédé de récupération sécurisée de données sont déterminées par des instructions de programmes d'ordinateurs.

Ainsi, la présente technique vise aussi un programme d'ordinateur sur un support d'informations (ou support d'enregistrement), ce programme étant susceptible d'être mis en oeuvre dans un dispositif d'enregistrement de données, ou plus généralement dans un ordinateur, ce programme comportant des instructions adaptées à la mise en oeuvre des étapes d'un procédé d'enregistrement sécurisé de données et/ou d'un procédé de récupération sécurisée de données, telles que définies ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable d'enregistrer le programme. Par exemple, le support peut comprendr un moyen d'enregistrement, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution d'au moins l'un quelconque des procédés en question.

La présente technique porte en outre sur dispositif d'enregistrement de données comprenant :
- une première mémoire non sécurisée ;
- une deuxième mémoire sécurisée ;
- un module d'obtention pour obtenir, à partir d'une clé mère enregistrée dans la deuxième mémoire, une clé dérivée correspondant à des données enregistrées dans la deuxième mémoire;
- un module de chiffrement pour chiffrer, à partir de la clé dérivée, lesdites données de façon à délivrer des données chiffrées ;
- un premier module d'enregistrement pour enregistrer les données chiffrées dans la première mémoire ;
- un module de détermination pour déterminer une empreinte de hachage desdites données ;
- un deuxième module d'enregistrement pour enregistrer ladite empreinte de hachage, en association avec les données, dans un fichier de hachage enregistré dans la première mémoire ;
- un troisième module d'enregistrement pour enregistrer, dans la deuxième mémoire, une empreinte de hachage générale représentative du contenu du fichier de hachage comprenant ladite empreinte de hachage ; et
- un module de suppression pour supprimer les données dans la deuxième mémoire postérieurement audit enregistrement des données chiffrées dans la première mémoire.

Selon un mode de réalisation particulier, ledit dispositif est tel que :
- le module d'obtention est configurée pour enregistrer, dans la deuxième mémoire, la clé dérivée obtenue à partir de la clé mère ; et
- le module de suppression est configuré pour supprimer la clé dérivée enregistrée dans la deuxième mémoire après le chiffrement desdites données par le module de chiffrement.

À noter que les différents modes de réalisation définis ci-avant en relation avec le procédé d'enregistrement sécurisé de données et au procédé de récupération sécurisée de données, de même ainsi que les avantages associés à ces procédés, s'appliquent par analogie au dispositif d'enregistrement sécurisé de l'invention.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

À noter par ailleurs que les différents modes de réalisation mentionnés ci-dessus sont combinables entre eux pour la mise en oeuvre de l'invention.

### 4. Figures

D'autres caractéristiques et avantages de la présente technique ressortiront de la description faite ci-dessous, en référence aux dessins annexés qui en illustrent des exemples de réalisation dépourvus de tout caractère limitatif. Sur les figures :
- la figure 1 présente schématiquement la structure d'un dispositif d'enregistrement sécurisé de données, selon un mode de réalisation particulier ;
- la figure 2 représente schématiquement des modules mis en oeuvre dans le dispositif d'enregistrement de données représenté en figure 1 ;
- la figure 3 représente, sous forme d'un organigramme, les étapes d'un procédé d'enregistrement sécurisé de données, selon un mode de réalisation particulier de l'invention ;
- la figure 4 représente, sous forme d'un organigramme, les étapes d'un procédé de récupération sécurisée de données, selon un mode de réalisation particulier de l'invention ;
- la figure 5 représente, sous forme d'un organigramme, un procédé d'enregistrement sécurisé de données, selon un mode de réalisation particulier de l'invention ; et
- la figure 6 représente, sous forme d'un organigramme, un procédé d'enregistrement sécurisé de données, selon un autre mode de réalisation de l'invention.

### 5. Description

Comme indiqué précédemment, l'invention concerne la sécurisation de données et porte plus particulièrement sur l'enregistrement sécurisé de données dans un dispositif d'enregistrement de données.

Comme exposé préalablement, le principe général de la technique proposée réside dans l'utilisation d'un dispositif d'enregistrement de données comprenant une première mémoire non sécurisée et une deuxième mémoire sécurisée, afin d'enregistrer des données de façon sécurisée. Plus particulièrement, le principe consiste à enregistrer des données sous forme chiffrée dans la mémoire non sécurisée de sorte que ces données soient accessibles au besoin sans compromettre leur confidentialité. Lorsqu'aucun accès à ces données n'est nécessaire, ces données ne sont pas présentes dans la mémoire sécurisée du dispositif afin d'économiser de l'espace mémoire dans cette mémoire sécurisée. Si, en revanche, l'accès aux données est nécessaire, les données chiffrées enregistrées dans la mémoire non sécurisée sont déchiffrées et enregistrées provisoirement dans la mémoire sécurisée afin de permettre l'accès aux données tout en garantissant la confidentialité de celles-ci. Un mécanisme de vérification de l'intégrité peut en outre être mis oeuvre dans le dispositif d'enregistrement afin de vérifier que les données qui sont déchiffrées dans la mémoire sécurisée sont intègres.

Les données dont l'on sécurise l'accès à l'aide de l'invention peuvent être quelconques, notamment en termes de nature et de forme.

D'autres aspects et avantages de la présente technique ressortiront des exemples de réalisation décrits ci-dessous en référence aux dessins mentionnés ci-avant.

Sauf indications contraires, les éléments communs ou analogues à plusieurs figures portent les mêmes signes de références et présentent des caractéristiques identiques ou analogues, de sorte que ces éléments communs ne sont généralement pas à nouveau décrits par souci de simplicité.

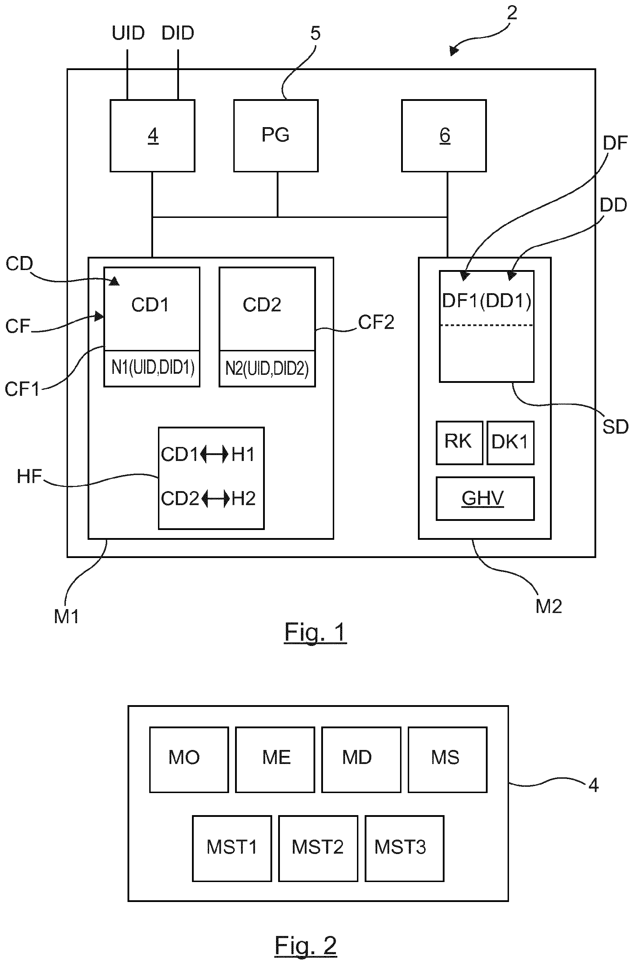

La **figure 1** représente, de manière schématique, la structure d'un dispositif d'enregistrement de données 2 conforme à un mode de réalisation particulier. Le dispositif 2 (appelé par la suite « terminal ») est un terminal de paiement dans ce cas particulier, d'autres exemples étant bien entendu envisageables dans le cadre de l'invention.

On notera que certains constituants faisant généralement partie d'un terminal tel qu'un terminal de paiement ont été volontairement omis car ils ne sont pas nécessaires à la compréhension de la présente technique.

Plus particulièrement, le terminal 2 comprend ici une unité de contrôle 4 et des mémoires non volatiles 5, 6, M1 et M2.

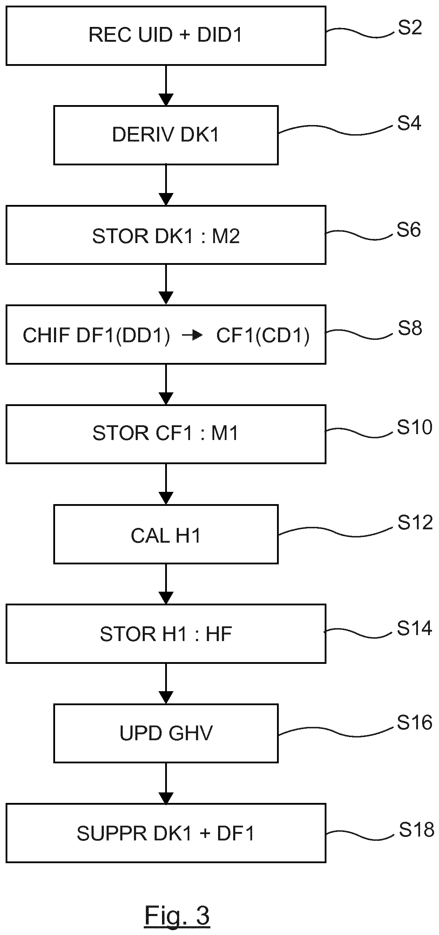

La mémoire 5 est une mémoire non volatile réinscriptible ou une mémoire morte (ROM), cette mémoire constituant un support d'enregistrement conforme à un mode de réalisation particulier de l'invention, lisible par le terminal 2, et sur lequel est enregistré un programme d'ordinateur PG conforme à un mode de réalisation particulier de l'invention. Ce programme d'ordinateur PG comprend des instructions pour l'exécution des étapes d'un procédé d'enregistrement sécurisé de données et d'un procédé de récupération sécurisé de données, selon un mode de réalisation particulier de l'invention. Les principales étapes de ces procédés sont représentées en **figure 3** décrite ultérieurement.

L'unité de contrôle 4 (un processeur dans cet exemple), piloté par le programme d'ordinateur PG, met ici en oeuvre un certain nombre de modules représentés en **figure 2****,** à savoir : un module d'obtention MO, un module de chiffrement ME, un module de détermination MD, un premier module d'enregistrement MST1, un deuxième module d'enregistrement MST2, un troisième module d'enregistrement MST3 et un module de suppression MS. Un exemple de mise en oeuvre de ces modules sera décrit ultérieurement.

En outre, le processeur 4 est apte à recevoir en entrée un identifiant d'utilisateur UID et un identifiant DID de données. L'usage des identifiants UID et DID sera décrit en détail ultérieurement dans une mise en oeuvre particulière.

La mémoire M2 est un mémoire sécurisée (ou protégée). On entend dans le présent exposé par « mémoire sécurisée », une mémoire dont l'accès au contenu est protégé par un mécanisme de sécurité approprié. Un tel mécanisme permet par exemple de vérifier l'identité et/ou l'authenticité d'un requérant souhaitant accéder à des données enregistrées dans la mémoire sécurisée en question. Typiquement, une mémoire sécurisée est attachée à un processeur sécurisé apte à mettre en oeuvre un mécanisme de sécurisation des données dans la mémoire, comprenant par exemple l'effacement des données en cas d'atteinte de l'intégrité des données. Le mécanisme de sécurité peut également être matériel (couche physique recouvrant la mémoire pour en protéger la lecture...).

La mémoire 6 est une mémoire non-volatile réinscriptible servant de mémoire de sauvegarde (ou « back-up »). On comprendra toutefois que l'utilisation d'une telle mémoire de sauvegarde n'est pas obligatoire pour mettre en oeuvre l'invention.

Dans l'exemple considéré ici, la mémoire de sauvegarde 6 est une mémoire sécurisée au même titre que la mémoire M2. La mémoire 6 peut être comprise dans la mémoire sécurisée M2 ou, alternativement, être externe à la mémoire sécurisée M2.

La mémoire M1, en revanche, est une mémoire non sécurisée. Autrement dit, l'accès au contenu de la mémoire M1 n'est pas protégé contrairement à l'accès du contenu de la mémoire M2.

La mémoire M1 est apte à enregistrer des données DD sous forme chiffrée (notées CD sous la forme chiffrée), par exemple sous la forme d'au moins un fichier chiffré CF, afin d'empêcher l'accès auxdites données DD à toutes personnes non autorisées. On comprendra toutefois que lesdites données chiffrées CD dans la mémoire M1 ne doivent pas obligatoirement être enregistrées sous la forme de fichier. On peut en effet envisager, dans le cadre de la présente technique, d'enregistrer dans la mémoire non sécurisée M1 des données chiffrées CD ne se présentant pas sous la forme d'un fichier. On supposera toutefois, dans les exemples de réalisation qui suivent, que chaque donnée chiffrée CD enregistrée dans la mémoire non sécurisée M1 est contenue dans un fichier chiffré CF.

On considère par exemple le cas où la mémoire M1 comprend un fichier chiffré CF1 contenant des données chiffrées CD1, ainsi qu'un fichier chiffré CF2 contenant des données chiffrées CD2. Dans cet exemple, les données chiffrées CD1 et CD2 sont respectivement les données DD1 et DD2 sous forme chiffrée.

Par ailleurs, un nom de fichier N1, N2 est attribué respectivement au fichier chiffré CF1, CF2. Toujours dans cet exemple, chaque nom de fichier comprend l'identifiant d'utilisateur UID d'un utilisateur et l'identifiant DID des données DD contenues sous forme chiffrée dans le fichier CF en question. Dans cet exemple, le nom de fichier N1 comprend l'identifiant d'utilisateur UID et l'identifiant DID2 de données DD1. De même, le nom de fichier N2 comprend ici le même identifiant d'utilisateur UID et l'identifiant DID2 de données DD2.

La mémoire M1 comprend en outre un fichier de hachage HF dans lequel on peut enregistrer une empreinte de hachage H respective en association avec chaque donnée DD (ou ensemble de données) de la mémoire M2 enregistrée sous forme chiffrée dans la mémoire M1. Chaque empreinte de hachage (ou « valeur de hash ») est obtenue en appliquant une fonction de hachage aux données DD correspondantes. La même fonction de hachage est utilisée pour déterminer l'empreinte de hachage de chaque ensemble de données que l'on enregistre sous forme chiffrée dans la mémoire non sécurisée M1. Une empreinte de hachage H est ainsi représentative des données contenues dans le fichier chiffré CF considéré, sans qu'il soit possible de déterminer, à partir de cette empreinte de hachage, ni le contenu du fichier CF en question, ni sa valeur en clair. Dans l'exemple représenté en **figure 1****,** le fichier de hachage HF comprend l'empreinte de hachage H1 associée aux données DD1, ainsi que l'empreinte de hachage H2 associé à des données DD2.

La mémoire sécurisée M2 est par ailleurs apte à enregistrer des données DD dont on souhaite préserver la confidentialité. Les données DD sont ici enregistrées dans la mémoire sécurisée M2 sous forme non chiffrée dans des fichiers non chiffrés DF. Comme indiqué par la suite, on considère par exemple un état initial où le fichier non chiffré DF1 comportant des données DD1 est enregistré dans la mémoire M2.

On comprendra toutefois que lesdites données DD ne doivent pas obligatoirement être enregistrées sous la forme de fichier lors de l'enregistrement dans la mémoire sécurisée M2. On peut en effet envisager, dans le cadre de la présente technique, d'enregistrer dans la mémoire sécurisée M2 des données DD ne se présentant pas sous la forme d'un fichier. On supposera toutefois, dans les exemples de réalisation qui suivent, que chaque donnée DD enregistrée dans la mémoire M2 est contenue dans un fichier DF.

La mémoire M2 est par ailleurs apte à enregistrer une clé cryptographique mère RK, une clé cryptographique (notée par exemple DK1) dérivée de la clé mère RK, ainsi qu'une empreinte de hachage générale GHV. L'objet et l'usage de ces paramètres seront décrits plus en détail ultérieurement dans une mise en oeuvre particulière.

Plus particulièrement, l'empreinte de hachage générale GHV est une empreinte de hachage obtenue en appliquant une fonction de hachage à partir du contenu du fichier de hachage HF. Ainsi, la valeur de GHV à un instant donné est représentative du contenu du fichier de hachage HF à l'instant considéré. Tout ajout, suppression ou modification d'une empreinte de hachage H dans le fichier de hachage HF a donc pour conséquence de modifier la valeur de GHV dans la mémoire M2, comme expliqué plus en détail par la suite.

Un mode de réalisation particulier de l'invention est à présent décrit en référence à la **figure 3****.** Plus précisément, le terminal 2 met en oeuvre un procédé d'enregistrement sécurisé de données en exécutant le programme d'ordinateur PG.

On considère un état initial dans lequel un fichier non chiffré DF1 comportant des données DD1 à l'état non chiffré est enregistré dans la mémoire sécurisée M2. On suppose, en outre, qu'aucun fichier chiffré CF n'est enregistré dans la mémoire M1 et que le fichier de hachage HF est vide.

On suppose par ailleurs que la clé cryptographique mère RK est préalablement générée dans le terminal 2, par exemple de façon aléatoire, et enregistrée dans la mémoire M2 comme indiqué précédemment. Dans un exemple particulier, la clé mère RK est générée aléatoirement une fois pour toute dans la vie du terminal 2.

Lors d'une étape d'obtention S2, le processeur 4 obtient un identifiant d'utilisateur UID d'un utilisateur du terminal 2 ainsi qu'un identifiant DID1 des données DD1. Dans un exemple particulier, le terminal 2 peut recevoir les identifiants UID et DID1 depuis l'extérieur dudit terminal. Alternativement, le terminal 2 terminal 2 peut déterminer au moins l'un parmi les identifiants UID et DID1. La détermination par le terminal 2 notamment de l'identifiant d'utilisateur UID1 permet d'empêcher qu'un tiers n'accède aux données DD d'un autre utilisateur dans le terminal Tl. La manière dont le processeur 4 détermine ou récupère l'identifiant d'utilisateur UID1 et l'identifiant DID1 pourra être adapté selon le contexte d'utilisation.

Le module d'obtention MO détermine (S4) ensuite, à partir de la clé mère RK enregistrée dans la mémoire sécurisée M2, une clé cryptographique DK1, dite « clé dérivée », correspondant aux données DD1 enregistrées dans la mémoire M2. Dans l'exemple envisagé ici, le module d'obtention MO obtient la clé dérivée DK1 à partir de la clé mère RK en utilisant l'identifiant d'utilisateur UID et l'identifiant DID1 des données DD1.

Le module d'obtention MO enregistre (S6) en outre la clé dérivée DK1 dans la mémoire sécurisée M2 afin que cette clé DK1 puisse être utilisée ultérieurement.

Au cours d'une étape de chiffrement S8, le module de chiffrement ME chiffre (S8), à partir de la clé dérivée DK1, le fichier DF1 comportant les données DD1 de sorte à obtenir un fichier chiffré CF1 comportant les données DD1 sous forme chiffrée (notées CD1). Pour ce faire, le module de chiffrement ME utilise par exemple un algorithme de chiffrement symétrique pour chiffrer le fichier DF1. Un algorithme de chiffrement asymétrique pourrait toutefois être envisagé dans le cadre de l'invention. On supposera ici que le même algorithme de chiffrement est utilisé pour chiffrer chaque fichier de données dans ce procédé.

Le fichier chiffré CF1 est enregistré (S10) par le premier module d'enregistrement MST1 dans la mémoire M1. Dans l'exemple décrit ici, le nom N1 comprenant l'identifiant d'utilisateur UID et l'identifiant DID1 des données DD1 est attribué au fichier chiffré CF1.

Le module de détermination MD détermine (S12) par ailleurs une empreinte de hachage H1 des données DD1 comprises sous forme non chiffrée dans le fichier DF1. Comme déjà expliqué, cette empreinte de hachage H1 est représentative des données DD1 contenues dans le fichier non chiffré DF1.

L'empreinte de hachage H1 est en outre enregistrée (S14) par le deuxième module de enregistrement MST2, dans le fichier de hachage HF, en association avec les données DD1. Dans un cas particulier, chaque empreinte de hachage H enregistrée dans le fichier de hachage HF est associée à l'identifiant DID des données DD correspondantes (c.-à-d. DID1 dans le cas présent).

Selon une variante de réalisation, suite à l'étape d'enregistrement S14, le processeur 4 peut en outre enregistrer une copie du fichier de hachage HF dans la mémoire de sauvegarde sécurisée 6. Cette sauvegarde permet si besoin de récupérer ultérieurement de façon sécurisée l'empreinte de hachage Hl, comme décrit par la suite.

Toujours dans le mode de réalisation envisagé ici, une fois l'étape S14 réalisée, le troisième module d'enregistrement MST3 détermine puis enregistre (S16), dans la mémoire sécurisée M2, une empreinte de hachage générale GHV représentative du contenu du fichier de hachage HF dans lequel se trouve à présent l'empreinte de hachage H1. Dans l'hypothèse où l'empreinte de hachage générale GHV a déjà une valeur quelconque préalablement à l'étape S16, cette valeur est mise à jour par le troisième module d'enregistrement MST3 lors de l'étape S16.

Au cours d'une étape de suppression S18, le module de suppression MS supprime le fichier non chiffré DF1 dans la mémoire sécurisée M2 de façon à y ménager de l'espace mémoire. Dans un exemple particulier, le module de suppression MS supprime (S18) en outre, après l'étape de chiffrement S8, la clé dérivée DK1 dans la mémoire sécurisée M2 afin d'y ménager encore plus d'espace mémoire.

On comprendra que la mise en oeuvre de ce mode de réalisation ne se limite pas à l'ordre d'exécution tel que représenté en **figure 3****.** En particulier, les étapes S12 à S16 peuvent être réalisées avant les (ou parallèlement aux) étapes S6-S10, voir avant (parallèlement à) l'étape S4.

La présente technique permet ainsi d'enregistrer de façon sécurisée des données dans le terminal 2 tout en limitant l'espace mémoire utilisé à cet effet dans la mémoire sécurisée M2. Pour ce faire, les données sont enregistrées sous forme chiffrée dans la mémoire non sécurisée. Ces mêmes données sont retirées de la mémoire sécurisée M2 afin de gagner de l'espace mémoire. La clé mère, à partir de laquelle sont chiffrées les données, est enregistrée dans la mémoire sécurisée du terminal de sorte qu'il n'est pas possible pour un tiers malveillant de déchiffrer facilement les données enregistrées sous forme chiffrée dans la mémoire non sécurisée M1.

Comme expliqué par la suite, la mise en oeuvre et l'enregistrement du fichier de hachage HF et de l'empreinte de hachage générale GHV (respectivement dans M1 et M2) permettent en outre de contrôler de façon fiable l'intégrité des données enregistrées sous forme chiffrée dans la mémoire non sécurisée M1.

Suite au procédé d'enregistrement sécurisé S4-S18 décrit ci-dessus, un utilisateur peut avantageusement accéder à des données DD présentes sous forme chiffrée dans la mémoire non sécurisée M1 sans mettre en danger la confidentialité desdites données.

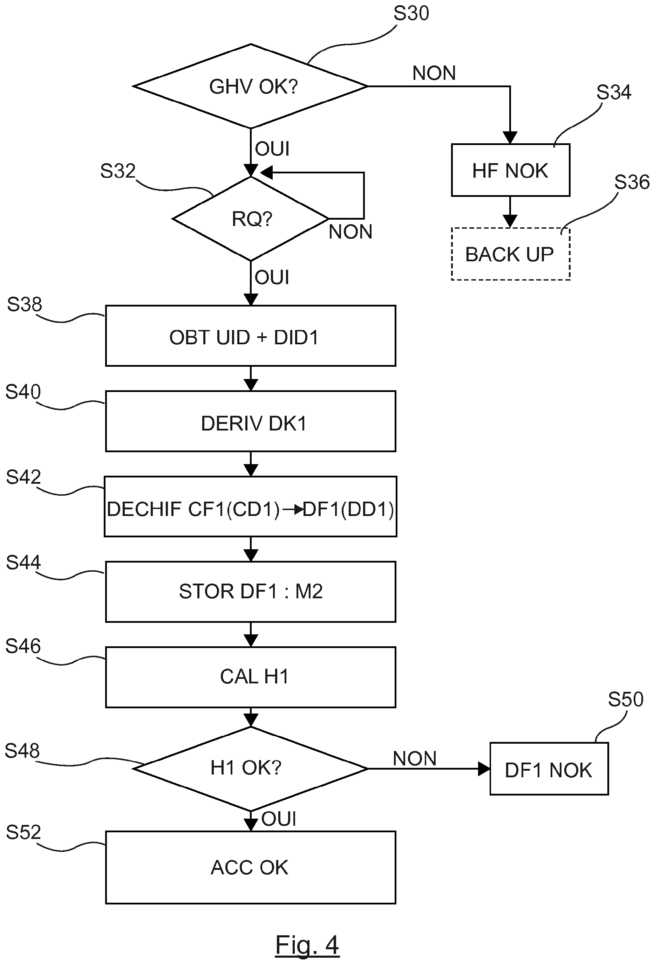

À cette fin, on décrit à présent en référence à la **figure 4** un procédé de récupération sécurisée de données S38-S48 postérieur au procédé d'enregistrement sécurisé S4-S18, ce procédé de récupération sécurisée de données étant mis en oeuvre par le terminal 2 selon un mode de réalisation particulier. Dans l'exemple décrit ici, le terminal 2 met en oeuvre un procédé de récupération sécurisée de données en exécutant le programme d'ordinateur PG.

Plus spécifiquement, postérieurement au procédé d'enregistrement sécurisé S4-S18, le processeur 4 vérifie (S30) l'intégrité du fichier de hachage HF à partir de l'empreinte de hachage générale GHV enregistrée dans la mémoire sécurisée M2. Pour ce faire, le processeur 4 calcule l'empreinte de hachage générale du fichier de hachage HF et vérifie que l'empreinte de hachage générale ainsi calculée concorde avec l'empreinte de hachage générale GHV enregistrée dans la mémoire sécurisée M2. Dans un exemple particulier, le processeur 4 procède systématiquement à l'étape S30 lors du démarrage du terminal 2 ou d'une application particulière mise en oeuvre dans le terminal 2.

En cas de concordance à l'étape de vérification S30, le processeur 4 met en oeuvre l'étape de détermination de l'accès aux données S32. Dans le cas contraire, le processeur 4 met en oeuvre l'étape de détermination que le fichier de hachage HF est invalide. Une telle absence de concordance traduit une probable altération (éventuellement malveillante) du fichier de hachage HF entre l'étape d'enregistrement S14 du fichier de hachage HF telle que précédemment décrite et la présente vérification S30.

Comme indiqué précédemment, selon une variante de réalisation, le processeur 4 peut avoir préalablement enregistré une copie du fichier de hachage HF dans la mémoire de sauvegarde sécurisée 6, suite à l'étape d'enregistrement S14. Dans ce cas, suite à l'étape S34 de détection de l'invalidité du fichier de hachage HF dans la mémoire M1, le processeur 4 peut alors récupérer (S36), dans la mémoire de sauvegarde 6, ladite copie du fichier de hachage HF. Une fois cette récupération S36 effectuée, le processeur 4 peut être configuré pour remplacer le fichier de hachage HF invalide contenu dans la mémoire non sécurisée M1 par la copie du fichier de hachage HF provenant de la mémoire de sauvegarde 6. Le processeur 4 peut ensuite procéder aux étapes S32 et suivantes comme décrites ci-après. La mémoire de sauvegarde 6 étant ici sécurisée, le processeur 4 a ainsi la capacité de récupérer une copie intègre du fichier de hachage HF en cas d'atteinte à l'intégrité du fichier de hachage original enregistré dans la mémoire non sécurisée M1.

Lors de l'étape de détermination S32, le processeur 4 détermine si l'accès aux données chiffrées CD1 enregistrées dans la mémoire M1 est requis. Lorsqu'une requête d'accès RQ aux données DD1 est reçue par le processeur 4, ce dernier procède aux étapes S38-S52 décrites ci-après en référence à la **figure 4****.**

On suppose ici que la requête d'accès RQ reçu par le terminal 2 comprend l'identifiant d'utilisateur UID et l'identifiant DID1 des données DD1 auquel un utilisateur autorisé (celui identifié par UID) souhaite accéder.

Au cours d'une étape de récupération S38, le processeur 4 récupère l'identifiant d'utilisateur UID et l'identifiant DID1 des données DD1.

Le processeur 4 obtient (S40) ensuite, à partir de la clé mère RK enregistrée dans la mémoire sécurisée M2, la clé dérivée DK1 correspondant aux données chiffrées CD1 enregistrées dans la mémoire non sécurisée M1. Dans cet exemple particulier, le processeur 4 détermine la clé dérivée DK1 à partir de clé mère RK en utilisant l'identifiant d'utilisateur UID et l'identifiant DID1 des données DD1 récupérés à l'étape de récupération S38.

De façon avantageuse, dans la mesure où l'identifiant d'utilisateur UID et l'identifiant DID de données sont constants, la clé dérivée DK1 déterminée à partir de la clé mère est toujours la même quel que soit le moment où celle-ci est calculée (étant entendu que la clé mère DK reste ici inchangée dans la mémoire sécurisée M2).

Toujours dans cet exemple, le processeur 4 enregistre la clé dérivée DK1 dans la mémoire sécurisée M2.

Le processeur 4 déchiffre (S42) alors, à partir de la clé dérivée DK1, les données chiffrées CD1 du fichier CF1 de sorte à récupérer les données DD1 sous leur forme non chiffrée. Ces données DD1 sont enregistrées (S44) en tant que fichier non chiffré DF1 dans la mémoire sécurisée M2.

Dans le mode de réalisation décrit ici, le déchiffrage S42 est réalisé directement dans la mémoire sécurisée M2. Autrement dit, les données DD1 délivrées lors du déchiffrage S42 sont directement enregistrées dans la mémoire sécurisée M2 (sans effectuer d'enregistrement intermédiaire des données DD1 dans une autre mémoire avant l'enregistrement S44 dans la mémoire sécurisée M2).

Par ailleurs, le processeur 4 détermine (S46) l'empreinte de hachage des données DD1 récupérées en S42 puis vérifie (S48) l'intégrité de ces données DD1 dans la mémoire M2 en comparant l'empreinte de hachage déterminée dans l'étape de détermination S46 avec l'empreinte de hachage H1 enregistrée dans le fichier de hachage HF en association avec les données DD1.

En cas de concordance à l'étape de vérification S48, le processeur 4 met en oeuvre l'étape d'autorisation S52. Dans le cas contraire, le processeur 4 détermine (S50) que les données DD1 récupérées dans la mémoire sécurisée M2 à l'étape S44 sont invalides, le procédé prenant alors fin.

Lors de l'étape d'autorisation S52, le processeur 4 autorise l'accès aux données DD1 dans la mémoire sécurisée M2 en réponse à la requête d'accès RQ reçue à l'étape S32. Autrement dit, le processeur 4 n'autorise l'accès aux données DD1 récupérées dans la mémoire M2 à l'étape S44 uniquement si la vérification d'intégrité S48 est passée avec succès.

La présente technique permet ainsi avantageusement d'accéder aux données enregistrées dans la mémoire non sécurisée M1 sans compromettre la confidentialité desdites données. Lors du procédé, à aucun moment les données ne sont présentes sous forme non chiffrée (en clair) dans la mémoire non sécurisée M1. L'invention permet en outre de vérifier de façon fiable que les données auxquelles on accède au besoin dans la mémoire sécurisée sont intègres.

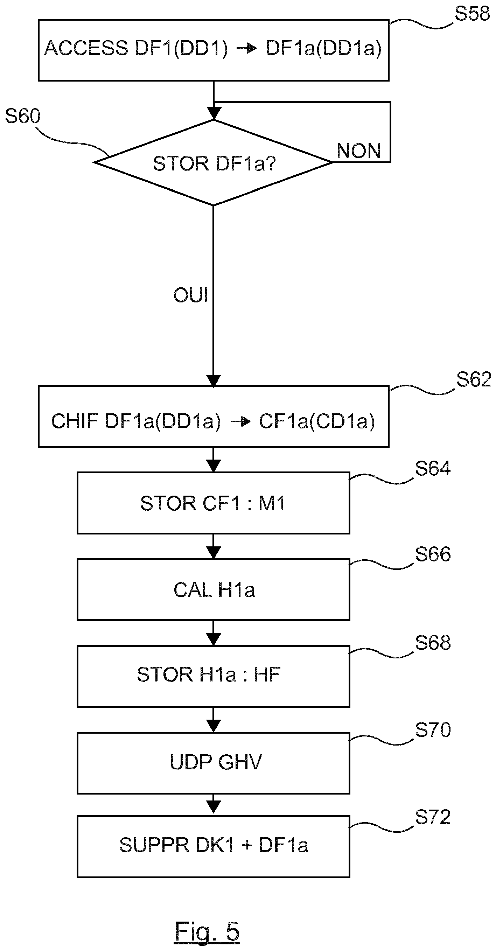

On décrit à présent, en référence à la **figure 5****,** un procédé d'enregistrement sécurisé mis en oeuvre par le terminal 2 sur les données DD1, une fois l'accès auxdites données SD1 terminé.

Plus précisément, on suppose à présent que, suite à l'autorisation octroyée à l'étape d'autorisation S52, l'utilisateur en question a accédé (S58) aux données DD1 enregistrées sous la forme du fichier non chiffré DF1 dans la mémoire sécurisée M2.

Lors de l'accès S58 de l'utilisateur aux données DD1 dans la mémoire M2, lesdites données DD1 sont susceptibles d'avoir été modifiées (accès en écriture). Aussi, suite à l'accès S58, ces données sont notées DD1a et le fichier non chiffré comprenant lesdites données DD1a est noté DFla (comme représenté en **figure 5**).

Au cours d'une étape de détermination S60, le processeur 4 détermine si un nouveau procédé d'enregistrement sécurisé des données DD1a présentes dans la mémoire sécurisée M2 doit être réalisé. Dans l'affirmative, le processeur 4 procède aux étapes S62-S72 décrites ci-après. Dans l'exemple considéré ici, le processeur 4 procède aux étapes S62-S72 lorsque l'accès aux données DD1a est terminé (ou alternativement, sur réception d'une requête de l'utilisateur).

Lors des étapes S62-72, le processeur 4 répète respectivement les étapes de chiffrement S8 des données, d'enregistrement S10 des données, de détermination S12 d'une empreinte de hachage, d'enregistrement S14 de l'empreinte de hachage, d'enregistrement (ou mise à jour) S16 de l'empreinte de hachage générale et de suppression (S18) des données (et de préférence aussi de la clé dérivée DK1), comme définies ci-avant en référence à la **figure 3****.**

Plus particulièrement, le module de chiffrement ME chiffre (S62), à partir de la clé dérivée DK1, les données DD1a de la mémoire M2 en données chiffrées CD1a, ces dernières étant enregistrées (S64) par le module d'enregistrement MST1 sous la forme d'un fichier chiffré CFla dans la mémoire non sécurisée M1. À noter que lors de l'étape de chiffrement S62, le module de chiffrement ME utilise ici la clé dérivée DK1 qui a été préalablement enregistrée dans la mémoire sécurisée M2 lors du procédé de récupération sécurisée préalablement décrit (étape S40). Alternativement, la clé dérivée DK1 peut à nouveau être déterminée à partir des identifiants UID et DID1.

Le module de détermination MD détermine (S66) en outre l'empreinte de hachage, notée à présent H1a, du fichier non chiffré DFla enregistré dans la mémoire sécurisée M2. Le module d'enregistrement MST2 enregistre (S68) alors l'empreinte de hachage H1a dans le fichier HF en association avec les données DD1a (par exemple avec l'identifiant DID1).

Le module d'enregistrement MST3 met également à jour (S70), dans la mémoire sécurisée M2, l'empreinte de hachage générale GHV de sorte à ce qu'elle soit représentative du contenu du fichier de hachage HF comprenant à présent l'empreinte de hachage H1a.

Au cours de l'étape de suppression S72, le module de suppression MS supprime par ailleurs le fichier non chiffré DFla, et de préférence la clé dérivée DK1, dans la mémoire sécurisée M2.

De façon avantageuse, l'invention permet ainsi de consulter et éventuellement modifier des données enregistrées sous forme chiffrée dans la mémoire non sécurisée du dispositif d'enregistrement de données et ce, sans compromettre la confidentialité des données en question et en s'assurant que les données auxquelles on accède sont intègres.

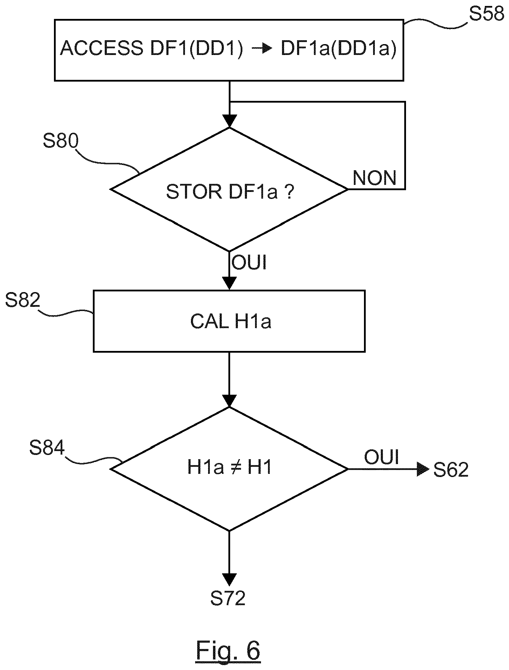

Une variante de réalisation aux étapes S62-S72 est à présent décrite en référence à la **figure 6****.**

On suppose ici également qu'un accès S58 des données DD1 dans la mémoire sécurisée M2 a eu lieu comme décrit précédemment en référence à la **figure 5****.**

Selon cette variante de réalisation, le processeur 4 détermine ensuite à l'étape S60 si un procédé d'enregistrement sécurisé des données DD1a présentes dans la mémoire sécurisée M2 doit être réalisé, de la même façon que décrit ci-avant en référence à la **figure 5****.** Dans l'affirmative, le processeur 4 met en oeuvre l'étape de détermination S82.

Au cours de l'étape de détermination S82, le module de détermination ME détermine l'empreinte de hachage notée H1a des données DD1a enregistrées dans la mémoire sécurisée M2, suite à l'accès S58. Dans cet exemple, le processeur 4 enregistre l'empreinte de hachage H1a dans la mémoire sécurisée M2.

Le processeur 4 compare (S84) l'empreinte de hachage H1a déterminée en S82 avec l'empreinte de hachage H1 enregistrée dans le fichier de hachage HF en association avec les données DD1, et détermine (S84) si ces empreintes de hachage H1a et H1 coïncident l'une avec l'autre. En cas de non concordance à l'étape S84, le processeur 4 met en oeuvre l'étape de chiffrement S62 et exécute les étapes S62-S72 comme décrites précédemment en référence à la **figure 5****.** En revanche, si le processeur 4 détecte en S84 que les empreintes de hachage H1 et H1a coïncident l'une avec l'autre, il procède directement à l'étape S72 telle que décrite ci-avant en référence à la **figure 5****.** Autrement dit, le processeur 4 ne répète les étapes de chiffrement S62, d'enregistrement S64 des données chiffrées, de détermination S66 d'une empreinte de hachage, d'enregistrement S68 de ladite empreinte de hachage, et d'enregistrement (ou mise à jour) S70 de la valeur de hachage générale telles que définies ci-avant, uniquement s'il est détecté en S84 que les données DD1a sont différentes des données DD1 (ce qui signifie que les données DD1 ont été modifiées lors de l'accès S58).

Cette variante de réalisation est avantageuse en ce qu'elle permet d'éviter la répétition superflue de certaines étapes du procédé d'enregistrement sécurisée suite à l'accès à des données dans la mémoire sécurisée du terminal. Il en résulte un gain de temps et d'efficacité, ainsi qu'une économie des ressources utilisées dans le terminal.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Procédé d'enregistrement sécurisé de données (DD1), mis en oeuvre dans un dispositif d'enregistrement de données (2) comprenant une première mémoire non sécurisée (M1) et une deuxième mémoire sécurisée (M2), le procédé comprenant les étapes suivantes :
- obtention (S4), à partir d'une clé mère (RK) enregistrée dans la deuxième mémoire, d'une clé dérivée (DK1) correspondant aux données (DD1) enregistrées dans la deuxième mémoire ;
- chiffrement (S8), à partir de la clé dérivée, des données (DD1) délivrant des données chiffrées (CD1) ;
- enregistrement (S10) des données chiffrées (CD1) dans la première mémoire (M1) ;
- détermination (S12) d'une empreinte de hachage (H1) desdites données (DD1) ;
- enregistrement (S14) de ladite empreinte de hachage, en association avec les données (DD1), dans un fichier de hachage (HF) enregistré dans la première mémoire ;
- enregistrement (S16), dans la deuxième mémoire, d'une empreinte de hachage générale (GHV) représentative du contenu du fichier de hachage (HF) comprenant ladite empreinte de hachage ; et
- suppression (S18) des données (DD1) dans la deuxième mémoire postérieurement audit enregistrement (S10) des données chiffrées (CD1) dans la première mémoire.

2. Procédé selon la revendication 1, dans lequel, après son obtention (S4), la clé dérivée est enregistrée (S6) dans la deuxième mémoire (M2), le procédé comprenant en outre une étape de suppression (S18) de la clé dérivée dans la deuxième mémoire après le chiffrement (S8) desdites données.

3. Procédé selon l'une quelconque des revendications 1 ou 2, dans lequel la clé mère (RK) est générée de façon aléatoire dans le dispositif d'enregistrement de données.

4. Procédé selon l'une quelconque des revendications 1 à 3, dans lequel, lors de l'étape d'obtention (S4), la clé dérivée (DK) est obtenue à partir :
- d'un identifiant d'utilisateur (UID) représentatif d'un utilisateur du dispositif d'enregistrement de données ; et
- d'un identifiant (DID1) des données (DD1).

5. Procédé selon la revendication 4, dans lequel, lors dudit enregistrement (S10) des données chiffrées (CD1), lesdites données chiffrées sont enregistrées dans la première mémoire (M1) sous la forme d'un fichier chiffré (CF1) auquel est attribué un nom (N1) de fichier comprenant l'identifiant d'utilisateur (UID) et l'identifiant (DID1) des données (DD1).

6. Procédé selon l'une quelconque des revendications 1 à 5, comprenant, suite audit enregistrement (S14) de l'empreinte de hachage dans le fichier de hachage (HF), un enregistrement d'une copie du fichier de hachage dans une mémoire de sauvegarde sécurisée du dispositif d'enregistrement de données (2).

7. Procédé de récupération sécurisée de données, mis en oeuvre dans un dispositif d'enregistrement de données (2) comprenant une première mémoire non sécurisée (M1) et une deuxième mémoire sécurisée (M2), le procédé comprenant :
- une vérification (S30) de l'intégrité d'un fichier de hachage (HF) enregistré dans la première mémoire, à partir d'une empreinte de hachage générale (GHV) enregistrée dans la deuxième mémoire (M2) ; et
lorsque le fichier de hachage est détecté comme étant intègre, le procédé comprend en outre, sur réception d'une requête d'accès (RQ) à des données (DD1), les étapes suivantes :
- obtention (S40), à partir d'une clé mère (RK) enregistrée dans la deuxième mémoire (M2), d'une clé dérivée (DK1) correspondant à des données chiffrées (CD1) enregistrées dans la première mémoire ;
- déchiffrage (S42), à partir de la clé dérivée (DK1) obtenue, des données chiffrées (CD1) de sorte à récupérer lesdites données (DD1) ;
- enregistrement (S44) desdites données (DD1) dans la deuxième mémoire (M2) ;
- détermination (S46) de l'empreinte de hachage (H1) desdites données (DD1) ;
- vérification (S48) de l'intégrité des données (DD1) enregistrées dans la deuxième mémoire en comparant l'empreinte de hachage (H1) déterminée pour les données (DD1) avec une empreinte de hachage (H1) enregistrée dans le fichier de hachage (HF) en association avec lesdites données (DD1) ; et
- autorisation (S52) d'un accès aux données (DD1) dans la deuxième mémoire (M2) en réponse à ladite requête d'accès (RQ), seulement si les données ont été déterminées (S48) comme étant intègres.

8. Procédé selon la revendication 7, comprenant une étape d'obtention (S38) d'un identifiant d'utilisateur (UID) représentatif d'un utilisateur du dispositif d'enregistrement de données et d'un identifiant (DID1) des données (DD1), dans lequel, la clé dérivée (DK1) est obtenue à partir de la clé mère (RK) en utilisant l'identifiant d'utilisateur et l'identifiant des données.

9. Procédé selon l'une quelconque des revendications 7 ou 8, comprenant, postérieurement à un accès (S58) aux données (SD1), l'exécution d'étapes de chiffrement (S8) des données (DD1a) en données chiffrées (CD1a), d'enregistrement (S10) des données chiffrées (CD1a), de détermination (S12) d'une empreinte de hachage (H1a), d'enregistrement (S14) de l'empreinte de hachage, d'enregistrement (S16) de l'empreinte de hachage générale (GHV) et de suppression (S18) des données (DD1a), telles que définies dans le procédé d'enregistrement sécurisé selon l'une quelconque des revendications 1 à 6.

10. Procédé selon l'une quelconque des revendications 7 ou 8, comprenant en outre, postérieurement à un accès (S58) de l'utilisateur aux données (DD1) dans la deuxième mémoire (M2), les étapes suivantes :
- détermination (S82) d'une seconde empreinte de hachage (H1a) desdites données (DD1a) suite audit accès ; et
- comparaison (S84) de ladite seconde empreinte (H1a) de hachage avec l'empreinte de hachage (H1) enregistrée dans le fichier de hachage (HF) en association avec les données (DD1), afin de détecter si les données (DD1) ont été modifiées lors dudit accès ;
dans lequel le procédé comprend l'exécution d'étapes de chiffrement (S8), d'enregistrement (S10) des données chiffrées, de détermination d'une empreinte de hachage (S12), d'enregistrement (S14) de ladite empreinte de hachage, et d'enregistrement (S16) d'une valeur de hachage générale, telles que définies dans le procédé d'enregistrement sécurisé selon l'une quelconque des revendications 1 à 6, uniquement s'il est détecté (S84) que les données (DD1) ont été modifiées lors dudit accès.

11. Programme d'ordinateur (PG) comportant des instructions pour l'exécution des étapes d'un procédé d'enregistrement sécurisé de données selon l'une quelconque des revendications 1 à 6 ou d'un procédé de récupération sécurisée de données selon l'une quelconque des revendications 7 à 10, lorsque ledit programme est exécuté par un ordinateur.

12. Dispositif d'enregistrement de données (2) comprenant :
- une première mémoire non sécurisée (M1) ;
- une deuxième mémoire sécurisée (M2) ;
- un module d'obtention (MO) configuré pour obtenir, à partir d'une clé mère (RK) enregistrée dans la deuxième mémoire, une clé dérivée (DK) correspondant à des données (DD1) enregistrées dans la deuxième mémoire ;
- un module de chiffrement (ME) configuré pour chiffrer, à partir de la clé dérivée, lesdites données (DD1) de façon à délivrer des données chiffrées (CD1) ;
- un premier module d'enregistrement (MST1) configuré pour enregistrer les données chiffrées (CD1) dans la première mémoire ;
- un module de détermination (MD) configuré pour déterminer une empreinte de hachage (H1) desdites données (DD1) ;
- un deuxième module d'enregistrement (MST2) configuré pour enregistrer ladite empreinte de hachage (H1), en association avec les données (DD1), dans un fichier de hachage (HF) enregistré dans la première mémoire (M1) ;
- un troisième module d'enregistrement (MST3) configuré pour enregistrer, dans la deuxième mémoire (M2), une empreinte de hachage générale (GHV) représentative du contenu du fichier de hachage (HF) comprenant ladite empreinte de hachage (H1) ; et
- un module de suppression (MS) configuré pour supprimer les données (DD1) dans la deuxième mémoire (M2) postérieurement audit enregistrement des données chiffrées dans la première mémoire (M1).

13. Dispositif selon la revendication 12, dans lequel :
- le module d'obtention (MO) est configurée pour enregistrer, dans la deuxième mémoire, ladite clé dérivée (DK) obtenue à partir de la clé mère (RK) ; et
- le module de suppression (MS) est configuré pour supprimer la clé dérivée enregistrée dans la deuxième mémoire après le chiffrement desdites données (DD1) par le module de chiffrement (ME).

## Patentansprüche

1. Verfahren zur sicheren Speicherung von Daten (DD1), das in einer Datenspeichervorrichtung (2) eingesetzt wird, umfassend einen ersten nicht gesicherten Speicher (M1) und einen zweiten gesicherten Speicher (M2), wobei das Verfahren die folgenden Schritte umfasst:
- Erhalt (S4), von einem in dem zweiten Speicher gespeicherten Mutterschlüssel (RK) eines abgeleiteten Schlüssels (DK1) entsprechend den Daten (DD1), die in dem zweiten Speicher gespeichert sind;
- auf Basis des abgeleiteten Schlüssels Verschlüsselung (S8) der Daten (DD1), die verschlüsselte Daten (CD1) liefert;
- Speicherung (S10) der verschlüsselten Daten (CD1) in dem ersten Speicher (M1);
- Bestimmung (S12) eines Hash-Abdrucks (H1) der Daten (DD1);
- Speicherung (S14) des Hash-Abdrucks in Verbindung mit den Daten (DD1) in einer Hash-Datei (HF), die in dem ersten Speicher gespeichert ist;
- Speicherung (S16), in dem zweiten Speicher, eines allgemeinen Hash-Abdrucks (GHV), der für den Inhalt der Hash-Datei (HF), umfassend den Hash-Abdruck, repräsentativ ist; und
- Löschen (S18) der Daten (DD1) in dem zweiten Speicher nach der Speicherung (S10) der verschlüsselten Daten (CD1) in dem ersten Speicher.

2. Verfahren nach Anspruch 1, bei dem der abgeleitete Schlüssel nach seinem Erhalt (S4) in dem zweiten Speicher (M2) gespeichert wird (S6), wobei das Verfahren ferner einen Schritt (S18) des Löschens des abgeleiteten Schlüssels in dem zweiten Speicher nach der Verschlüsselung (S8) der Daten umfasst.

3. Verfahren nach einem der Ansprüche 1 oder 2, bei dem der Mutterschlüssel (RK) zufällig in der Datenspeichervorrichtung erzeugt wird.

4. Verfahren nach einem der Ansprüche 1 bis 3, bei dem bei dem Schritt des Erhalts (S4) der abgeleitete Schlüssel (DK) erhalten wird aus:
- einem Benutzeridentifikator (UID), der für einen Benutzer der Datenspeichervorrichtung repräsentativ ist; und
- einem Identifkator (DID1) der Daten (DD1).

5. Verfahren nach Anspruch 4, bei dem bei der Speicherung (S10) der verschlüsselten Daten (CD1) die verschlüsselten Daten in dem ersten Speicher (M1) in Form einer verschlüsselten Datei (CF1) gespeichert werden, der ein Dateiname (N1) zugewiesen wird, umfassend den Benutzeridentifikator (UID) und den Identifikator (DID1) der Daten (DD1).

6. Verfahren nach einem der Ansprüche 1 bis 5, umfassend nach der Speicherung (S14) des Hash-Abdrucks in der Hash-Datei (HF) eine Speicherung einer Kopie der Hash-Datei in einem gesicherten Sicherungsspeicher der Datenspeichervorrichtung (2).

7. Verfahren zur gesicherten Datenrückgewinnung, das in einer Datenspeichervorrichtung (2) eingesetzt wird, umfassend einen ersten nicht gesicherten Speicher (M1) und einen zweiten gesicherten Speicher (M2), wobei das Verfahren umfasst:
- eine Überprüfung (S30) der Integrität einer Hash-Datei (HF), die in dem ersten Speicher gespeichert ist, auf Basis eines allgemeinen Hash-Abdrucks (GHV), der in dem zweiten Speicher (M2) gespeichert ist; und
wenn die Hash-Datei als integer erkannt wird, umfasst das Verfahren ferner bei Empfang eines Zugriffsantrags (RQ) auf Daten (DD1) die folgenden Schritte:
- Erhalt (S40) aus einem in dem zwischen Speicher (M2) gespeicherten Mutterschlüssel (RK) eines abgeleiteten Schlüssels (DK1) entsprechend verschlüsselten Daten (CD1), die in dem ersten Speicher gespeichert sind;
- Entschlüsselung (S42) aus dem erhaltenen abgeleiteten Schlüssel (DK1) der verschlüsselten Daten (CD1), um die Daten (DD1) rückzugewinnen;
- Speicherung (S44) der Daten (DD1) in dem zweiten Speicher (M2);
- Bestimmung (S46) des Hash-Abdrucks (H1) der Daten (DD1) ;
- Überprüfung (S48) der Integrität der Daten (DD1), die in dem zweiten Speicher gespeichert sind, wobei der Hash-Abdruck (H1), der für die Daten (DD1) bestimmt wurde, mit einem Hash-Abdruck (H1) verglichen wird, der in der Hash-Datei (HF) in Verbindung mit den Daten (DD1) gespeichert ist; und
- Genehmigung (S52) eines Zugriffs auf die Daten (DD1) in dem zweiten Speicher (M2) als Antwort auf die Zugriffsanfrage (RQ) nur dann, wenn die Daten als integer bestimmt wurden (S48).

8. Verfahren nach Anspruch 7, umfassend einen Schritt des Erhalts (S38) eines Benutzeridentifikators (UID), der für einen Benutzer der Datenspeichervorrichtung repräsentativ ist, und eines Identifikators (DID1) der Daten (DD1), bei dem der abgeleitete Schlüssel (DK1) aus dem Mutterschlüssel (RK) erhalten wird, wobei der Benutzeridentifikator und der Identifkator der Daten verwendet wird.

9. Verfahren nach einem der Ansprüche 7 oder 8, umfassend nach einem Zugriff (S58) auf die Daten (SD1) die Ausführung von Schritten zur Verschlüsselung (S8) der Daten (DD1a) zu verschlüsselten Daten (CD1a), zur Speicherung (S10) der verschlüsselten Daten (CD1a), zur Bestimmung (S12) eines Hash-Abdrucks (H1a), zur Speicherung (S14) des Hash-Abdrucks, zur Speicherung (S16) des allgemeinen Hash-Abdrucks (GHV) und zum Löschen (S18) der Daten (DD1a), wie bei dem Verfahren zur sicheren Speicherung nach einem der Ansprüche 1 bis 6 definiert.

10. Verfahren nach einem der Ansprüche 7 oder 8, ferner umfassend nach einem Zugriff (S58) des Benutzers auf die Daten (DD1) in dem zweiten Speicher (M2) die folgenden Schritte:
- Bestimmung (S82) eines zweiten Hash-Abdrucks (H1a) der Daten (DD1a) nach dem Zugriff; und
- Vergleich (S84) des zweiten Hash-Abdrucks (H1a) mit dem Hash-Abdruck (H1), der in der Hash-Datei (HF) in Verbindung mit den Daten (DD1) gespeichert ist, um zu erkennen, ob die Daten (DD1) beim Zugriff verändert wurden;
bei dem das Verfahren die Ausführung von Schritten der Verschlüsselung (S8), der Speicherung (S10) der verschlüsselten Daten, der Bestimmung eines Hash-Abdrucks (S12), der Speicherung (S14) des Hash-Abdrucks und der Speicherung (S16) eines allgemeinen Hash-Werts, wie bei dem Verfahren zur sicheren Speicherung nach einem der Ansprüche 1 bis 6 definiert, nur dann umfasst, wenn erkannt wird (S84), dass die Daten (DD1) bei dem Zugriff verändert wurden.

11. Computerprogramm (PG), umfassend Anweisungen für die Ausführung der Schritte eines Verfahrens zur sicheren Speicherung nach einem der Ansprüche 1 bis 6 oder eines Verfahrens zur sicheren Rückgewinnung von Daten nach einem der Ansprüche 7 bis 10, wenn das Programm von einem Computer ausgeführt wird.

12. Datenspeichervorrichtung (2), umfassend:
- einen ersten nicht gesicherten Speicher (M1);
- einen zweiten gesicherten Speicher (M2);
- ein Empfangsmodul (MO), das eingerichtet ist, um von einem in dem zweiten Speicher gespeicherten Mutterschlüssel (RK) einen abgeleiteten Schlüssel (DK) entsprechend in dem zweiten Speicher gespeicherten Daten (DD1) zu erhalten;
- ein Verschlüsselungsmodul (ME), das eingerichtet ist, um auf Basis des abgeleiteten Schlüssels die Daten (DD1) zu verschlüsseln, um verschlüsselte Daten (CD1) zu liefern;
- ein erstes Speichermodul (MST1), das eingerichtet ist, um die verschlüsselten Daten (CD1) in dem ersten Speicher zu speichern;
- ein Bestimmungsmodul (MD), das eingerichtet ist, um einen Hash-Abdruck (H1) der Daten (DD1) zu bestimmen;
- ein zweites Speichermodul (MST2), das eingerichtet ist, um den Hash-Abdruck (H1) in Verbindung mit den Daten (DD1) in einer in dem ersten Speicher (M1) gespeicherten Hash-Datei (HF) zu speichern;
- ein drittes Speichermodul (MST3), das eingerichtet ist, um in dem zweiten Speicher (M2) einen allgemeinen Hash-Abdruck (GHV) zu speichern, der für den Inhalt der Hash-Datei (HF), umfassend den Hash-Abdruck (H1), repräsentativ ist; und
- ein Löschmodul (MS), das eingerichtet ist, um die Daten (DD1) in dem zweiten Speicher (M2) nach der Speicherung der verschlüsselten Daten in dem ersten Speicher (M1) zu löschen.

13. Vorrichtung nach Anspruch 12, bei der:
- das Empfangsmodul (MO) eingerichtet ist, um in dem zweiten Speicher den abgeleiteten Schlüssel (DK), der aus dem Mutterschlüssel (RK) erhalten wird, zu speichern; und
- das Löschmodul (MS) eingerichtet ist, um den in dem zweiten Speicher gespeicherten abgeleiteten Schlüssel nach der Verschlüsselung der Daten (DD1) durch das Verschlüsselungsmodul (ME) zu löschen.

## Claims

1. Method for the secured recording of data (DD1), implemented in a data-recording device (2) comprising a first non-secured memory (M1) and a second secured memory (M2), the method comprising the following steps:
- obtaining (S4) a derived key (DK1) corresponding to the data (DD1) recorded in the second memory from a root key recorded in the second memory;
- encrypting (S8) data (DD1) using the derived key, delivering encrypted data (DD1);
- recording (S10) the encrypted data (CD1) in the first memory (M1);
- determining (S12) a hash imprint (H1) of said data (DD1);
- recording (S14) said hash imprint in association with the data (DD1) in a hash file (HF) recorded in the first memory;
- recording (S16) a general hash imprint (GHV), representing the content of the hash file (HF) comprising said hash imprint, in the second memory; and
- eliminating (S18) the data (DD1) in the second memory subsequently to said recording (S10) of encrypted data (CD1) in the first memory.

2. Method according to claim 1 wherein, after it is obtained (S4), the derived key is recorded (S6) in the second memory (M2), the method furthermore comprises a step (S18) for eliminating the derived key from the second memory after the encryption (S8) of said data.

3. Method according to any one of the claims 1 or 2, wherein the root key (RK) is generated randomly in the data-recording device.

4. Method according to any one of the claims 1 to 3 wherein, during the step (S4) for obtaining, the derived key (DK) is obtained from:
- a user identifier (UID) representing a user of the data-recording device; and
- a data (DD1) identifier (DID1).

5. Method according to claim 4, wherein, during said recording (S10) of the encrypted data (CD1), said encrypted data are recorded in the first memory (M1) in the form of an encrypted file (CF1) to which a file name (N1) is assigned comprising the user identifier (UID) and the data (DD1) identifier (DID1).

6. Method according to any one of the claims 1 to 5 comprising, after said recording (S14) of the hash imprint in the hash file (HF), a recording of a copy of the hash file in a secured back-up memory of the data-recording device (2).

7. Method for the secured retrieval of data, implemented in a data-recording device (2) comprising a first non-secured memory (M1) and a second secured memory (M2), the method comprising:
- a verification (S30) of the integrity of a hash file (HF) recorded in the first memory from a general hash imprint (GHV) recorded in the second memory (M2); and
when the hash file is detected as having integrity, the method furthermore comprises, upon reception of a request (RQ) for access to data (DD1), the following steps:
- obtaining (S40) a derived key (DK1) corresponding to encrypted data (CD1) recorded in the first memory, from a root key (RK) recorded in the second memory (M2);
- decrypting (S42) encrypted data (CD1) using the obtained derived key (DK1) so as to retrieve said data (DD1);
- recording (S44) said data (DD1) in the second memory (M2);
- determining (S46) the hash imprint (H1) of said data (DD1);
- verifying (S48) the integrity of the data (DD1) recorded in the second memory by comparing the hash imprint (H1) determined for the data (DD1) with a hash imprint (H1) recorded in the hash file (HF) in association with said data (DD1); and
- authorization (S52) of access to the data (DD1) in the second memory (M2) in response to said access request (RQ), only if the data has been determined (S48) as having integrity.

8. Method according to claim 7, comprising a step (S38) for obtaining a user identifier (UID) representing a user of the data-recording device and a data (DD1) identifier (DID1), in which the derived key (DK1) is obtained from the root key (RK) by using the user identifier and the data identifier.

9. Method according to any one of the claims 7 or 8 comprising, subsequently to an access (S58) to the data (SD1), the execution of steps (S8) for encrypting data (DD1a) as encrypted data (CD1a), recording (S10) encrypted data (CD1a), determining (S12) a hash imprint (H1a), recording (S14) the hash imprint, recording (S16) the general hash imprint (GHV) and eliminating (S18) data (DD1a), as defined in the secured recording method according to any one of the claims 1 to 6.

10. Method according to any one of the claims 7 or 8, further comprising the following steps after an access (S58) by the user to the data (DD1) in the second memory (M2):
- determining (S82) a second hash imprint (H1a) of said data (DD1a) following said access; and
- comparing (S84) said second hash imprint (H1a) with the hash imprint (H1) recorded in the hash file (HF) in association with the data (DD1), in order to detect whether the data (DD1) have been modified during said access;
wherein the method comprises the execution of the steps of encrypting (S8), recording (S10) encrypted data, determining (S12) a hash imprint, recording (S14) said hash imprint and recording (S16) a general hash value as defined in the secured recording method according to any one of the claims 1 to 6, only if it has been detected (S84) that the data (DD1) have been modified during said access.

11. Computer program (PG) comprising instructions for the execution of the steps of a method for the secured recording of data according to any one of the claims 1 to 6 or of a method for the secured retrieval of data according to any one of the claims 7 to 10, when said program is executed by a computer.

12. Data-recording device (2) comprising:
- a first non-secured memory (M1);
- a second secured memory (M2);
- an obtaining module (MO) configured to obtain a derived key corresponding to data recorded in the second memory from a root key (RK) recorded in the second memory;
- an encryption module (ME) configured for the encryption, using the derived key, of said data (DD1) so as to deliver encrypted data (CD1);
- a first recording module (MST1) configured for the recording of the encrypted data (CD1) in the first memory;
- a determining module (MD) configured to determine a hash imprint (H1) of said data (DD1);
- a second recording module (MST2) configured for the recording of said hash imprint (H1), in association with the data (DD1), in a hash file (HF) recorded in the first memory (M1);
- a third recording module (MST3) configured for the recording, in the second memory (M2), of a general hash imprint (GHV) representing the content of the hash file (HF) comprising said hash imprint (H1); and
- an elimination module (MS) configured to eliminate the data in the second memory (M2) after said recording of the encrypted data in the first memory (M1).

13. Device according to claim 12, wherein:
- the obtaining module (MO) is configured for the recording, in the second memory, of said derived key (DK) obtained from the root key (RK); and
- the elimination module (MS) is configured to eliminate the derived key recorded in the second memory after the encryption of said data (DD1) by the encryption module (ME).
